# EUROPEAN PATENT APPLICATION

(11) **EP 4 411 766 A1**
(43) Date of publication of application: **07.08.2024**
(21) Application number: 23305118.4
(22) Date of filing: 31.01.2023
(51) Int. Cl.: H01H 1/38, H01H 31/32, H01H 33/12, H01H 33/22

(54) **SF6 FREE GAS INSULATED DISCONNECTOR WITH LIMITED ARCING VOLUME**

(71) Applicant: General Electric Technology GmbH, 5400 Baden (CH)
(72) Inventor: BERNARD, Felix, 73100 Aix-les-Bains (FR); GUYON, Olivier, 73100 Aix-les-Bains (FR); MONTBEL, Matthias, 73100 Aix-les-Bains (FR)
(74) Representative: Brevalex

(57) **Abstract**

The invention concerns a disconnector (100) for a GIS comprising:
- a pair of permanent contacts (24, 41), one (24) fixed and the other one (41) movable along an axis (AA'), called the axis of the disconnector;
- a pair of arcing contacts (22, 42), one (22) fixed and the other one (42) movable;
- an insulating part (52) located inside said fixed arcing contacts (22, 42), and means (50) for pressing said insulating part against a front surface of the movable arcing contact (42);
- an insulating ring (56) located at the outlet of the fixed arcing contact (22).

## Description

### TECHNICAL FIELD AND PRIOR ART

The invention relates to the gas-insulated substations, commonly referred to as Gas-Insulated Substations (GISs). Substations of this type comprise switchgears, in particular busbar disconnectors. Pieces of switchgear are generally insulated using sulfur hexafluoride (SF₆) in metal tanks filled with SF₆ under pressure, for example at a service pressure of 0.4 megapascals (MPa) to 0.8 MPa, e.g. 0.7 MPa.

Sulfur hexafluoride (SF₆) being estimated to contribute to the greenhouse effect, it was recently replaced by another gas, the so-called "g3" gas,, comprising heptafluoroisobutyronitrile mixed with a dilution gas comprising carbon dioxide and oxygen is used in replacement of SF₆, opening the path to a new generation of high voltage (HV) electrical transmission equipment. This g3 gas has a drastically reduced environmental impact (more than 99% less gas global warming potential (GWP)) .

But it has been noticed that powder is generated during the opening of circuit-breakers of GIS implementing said gas. This powder, which results from the decomposition of the g3 gas used in replacement of the SF₆ is harmful for dielectric strength.

There is therefore the problem of limiting the generation of this powder and/or of confining it, partially or fully.

There is another problem, which is the duration of the arc: there is no possibility today to limit said duration, whatever the gas; in the case of the g3 gas, said duration contributes to more decomposition of the gas as explained above.

There is thus the problem of finding a new disconnector, able to reduce the duration of the arc when opening a disconnector.

Accelerating the speed of the opening phase of the disconnector is not favourable, because it reduces the number of zero current crossings, at which the arc extinguishes. Furthermore, increasing the opening speed induces wear phenomena that degrade performance of the device.

There is also a problem of misalignment of the contacts with respect to the axis of the disconnector. More precisely, the movable arcing contact aligns according to the movable main contact or follows the alignment of movable main contact, which may itself be misaligned. This reduces the opening speed but also results in an arc not being homogeneous around the central axis of the device (both the axis of the fixed arcing contact and the movable arcing contact may be slightly offset from each other) and in an irregular wear at the periphery of both arcing contacts.

There is another problem. Generally speaking disconnectors don't have switching capabilities (compared to Circuit Breakers). However, IEC standard requires two switching capabilities for disconnectors, in particular GIS disconnectors which are set up in a double busbar arrangement with coupling :
- Bus Transfer Current Switching (BTCS);
- Bus Charging Current Switching (BCCS).

Due to this IEC requirement BTCS, one needs to find a solution to be able to switch these currents. The problem with the new gas "g3" was the generation of powder during this BTCS. A solution must be found to solve this problem.

### SUMMARY OF THE INVENTION

In order to solve one or more of the above problems, the inventors have found a solution to confine the arc generated during disconnector switching.

The invention first concerns a disconnector for a GIS comprising:
- a pair of permanent contacts, one fixed and the other one mobile along an axis (AA'), called the axis of the disconnector;
- a pair of arcing contacts, one being fixed and the other one mobile.

In an embodiment, it further comprises:
- an insulating part located inside said fixed arcing contacts, and means for pressing said insulating part against a front surface of the movable arcing contact;
- an insulating ring located at the outlet of the fixed arcing contact.

When the arcing contacts separate, they form, together with the insulating part and the insulating ring, a limited volume which contains a limited quantity of gas. Thus, only a limited quantity of gas can be decomposed by the arc. This is particularly favourable when using a gas which otherwise generate much powder, as already explained above.

Said insulating ring:
- can have a V-shaped section in a plane containing said axis;
- and/or can extend along the axis between a front face which faces said fixed arcing contact and an opposite back face and its internal surface having a restriction between said both ends.

An internal surface of said insulating ring can have a first slope which is inclined in a first direction from said front face to the restriction and then a second slope which is inclined in the opposite direction from the restriction to the back face. Said second slope can be inclined with an angle comprised between 50° and 10° with respect to the axis of the circuit breaker.

In a disconnector according to the invention, as defined above or in the rest of this application, a front end of the fixed arcing contact can have a concave portion, for example a stair step shape; this allows a shorter duration of the arc and therefore limits the decomposition of the gas of the GIS.

In a disconnector according to the invention, at least part of the insulating part located inside said fixed arcing contact can have the shape of a disk or of a cylinder.

The insulating part located inside said fixed arcing contact can comprise a stopping member cooperating with a stopping member of the fixed arcing contact to block the movement of the insulating part under the action of the means for pressing said insulating part against a front surface of the movable arcing contact.

The invention also concerns a GIS comprising:
- a metal tank filled with a gas;
- a disconnector according to the invention, as disclosed above or in this application.

The gas can be for example SF₆, but alternatively it can comprise an alternative gas, for example comprising heptafluoroisobutyronitrile and/or heptafluoroisopropyl trifluoromethyl ketone (also named 2-butanone, 1,1,1,3,4,4,4-heptafluoro-3-(trifluoromethyl)- (CAS No 756-12-7)) and/or COz and/or Oz and/or N₂ and/or an oxygenated compounds; for example it can comprise both CO₂ and a fluorinated compound, for example heptafluoroisobutyronitrile and/or heptafluoroisopropyl trifluoromethyl ketone. Said alternative gas can decompose and generate much powder as explained above.

The invention also concerns a method for opening a disconnector of a GIS according to the invention, as disclosed above or in this application; in an embodiment, it comprises:
- moving the movable arcing contact and the movable main contact with respect to the fixed arcing contact and the fixed main contact, thereby opening the main contacts and closing the pair of arcing contacts, and pressing the insulating part located inside said fixed arcing contacts against a front surface of the movable arcing contact;
- separating said pair of arcing contacts from each other, thereby triggering an arc between them, in a volume limited by said arcing contacts and by both said insulating part and said insulating ring.

### BRIEF DESCRIPTION OF THE DRAWINGS

- figure 1 shows an example of a Gas-Insulated Substations;
- figures 2A - 2D show an example of a disconnector according to the invention;
- figures 3A - 3B show an embodiment of arcing contacts according to the invention;
- figure 4 shows the arcing contacts of a known disconnector;
- figures 5A - 5B show another embodiment of a fixed arcing contact according to the invention;
- figure 6 illustrates an embodiment of an insulating piece implemented in an embodiment of the invention;
- figure 7 illustrates the problem of the axis of the two arcing contacts not being aligned with each other.

### DETAILLED DESCRIPTION OF SPECIFIC EMBODIMENTS

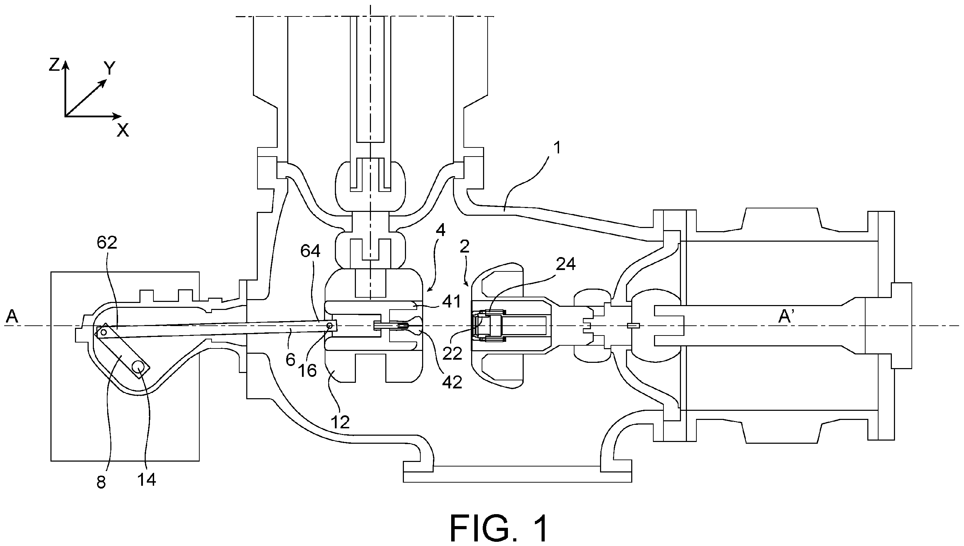

An example of a metal tank 1, or interrupting chamber, comprising a disconnector according to the invention, is illustrated on figure 1. The metal tank 1 is filled with a gas, for example SF₆ or another gas, for example comprising heptafluoroisobutyronitrile and/or heptafluoroisopropyl trifluoromethyl ketone (also named 2-butanone, 1,1,1,3,4,4,4-heptafluoro-3-(trifluoromethyl)- (CAS No 756-12-7)) and/or CO₂ and/or O₂ and/or N₂ and/or an oxygenated compounds; for example said other gas can comprise both CO₂ and a fluorinated compound, for example heptafluoroisobutyronitrile and/or heptafluoroisopropyl trifluoromethyl ketone.

The device of figure 1 comprises a disconnector which extends along an axis AA' and which comprises a pair of contacts 2, 4 mounted to move relative to each other along said axis AA' with help of an actuation system 6, 8. They can move from a closed position in which the electric current can flow to an open position in which the electric current is interrupted and vice-versa.

By convention, the term "main contact" is used to designate an electrical contact via which the rated current passes; the main contact is associated with an "arcing contact" which performs the function of breaking proper. The term "moving contact" is used to designate the main and arcing contact assembly that is connected directly to the actuation system 6, 8.

The disconnector comprises:
- a first moving contact 4 made up of an arcing contact 42, e.g. in the form of a plurality of fingers, and of a main contact 41;
- and a second contact 2 that is stationary in this example, made up of an arcing contact 22 and of a main contact 24 (the rings 240 and 241 in the example described below).

More details about the disconnector are given below; but these two contacts co-operate between an open position in which the two contacts 2, 4 are separated from each other (see figure 1) and a closed position (not shown) in which they allow electrical current to pass between them.

During the breaking procedure, the two main contacts 41, 24 separate first, and then the arcing contacts 42, 21 separate, after a latency period, if any, generated by the length of the mutual engagement, forming an electric arc that is extinguished by the contact 4 subsequently being moved further away.

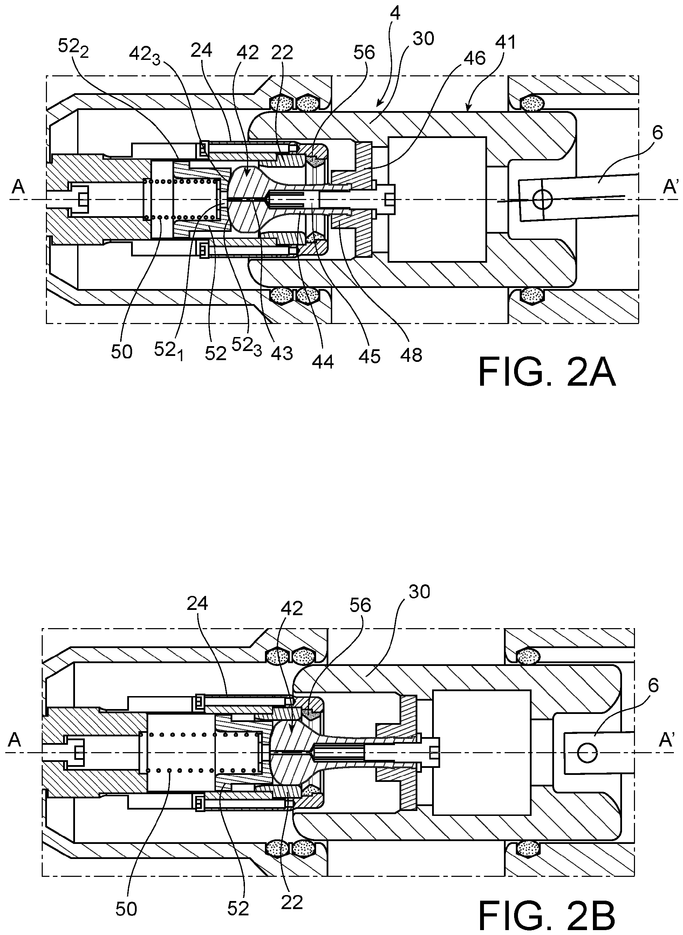

An example of a disconnector according to the invention and which can be implemented in the device of figure 1 is more precisely illustrated on Figures 2A-2E. It extends along the longitudinal axis AA'.

The movable contact 4 comprises the main contact 41, in the form of a tube 30, and the movable arcing contact 42.

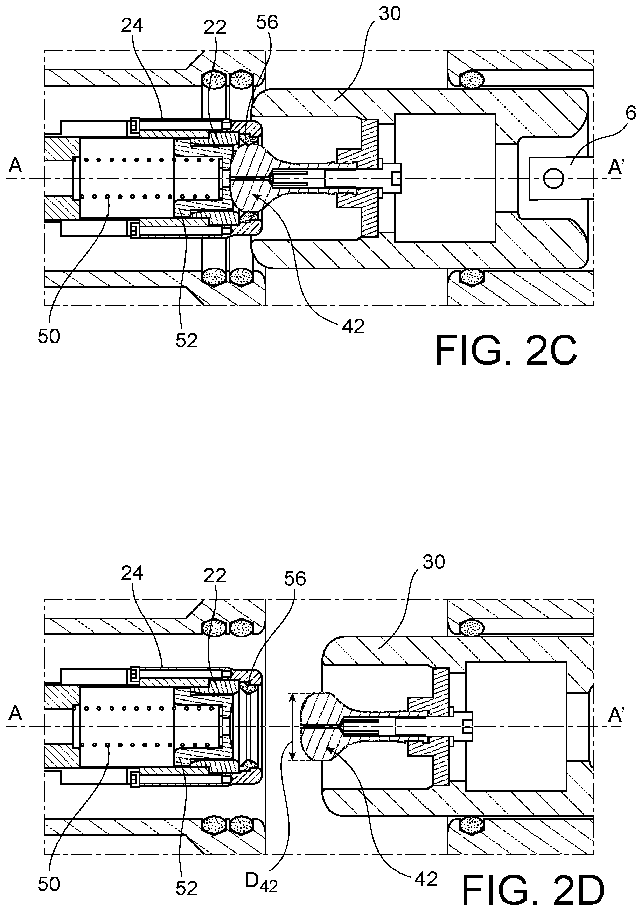

The movable contact 4 can be moved between a closed position (figure 2A) and an open position (figure 2D), with help of an actuation system 6, 8.

The movable arcing contact 42 is formed by the contact area itself 42 (it is made for example of a conductive and heat resistant material CuW) at the end of flexible fingers (made for example of a conductive or highly conductive material like CuCr). In other words, part 42 is preferably bi-material, the 2 materials can be welded for example by Electron Beam Welding. At one end, it can be made of CuW to sustain arc heat and to be conductive. At the other end, it can be conductive and flexible (forming "fingers"). This part 42 can be fixed using basic screw(s), to supporting plate 46 or, if supporting plate 46 is integrated to tube 30, it can be directly fixed to the disconnector tube 30.

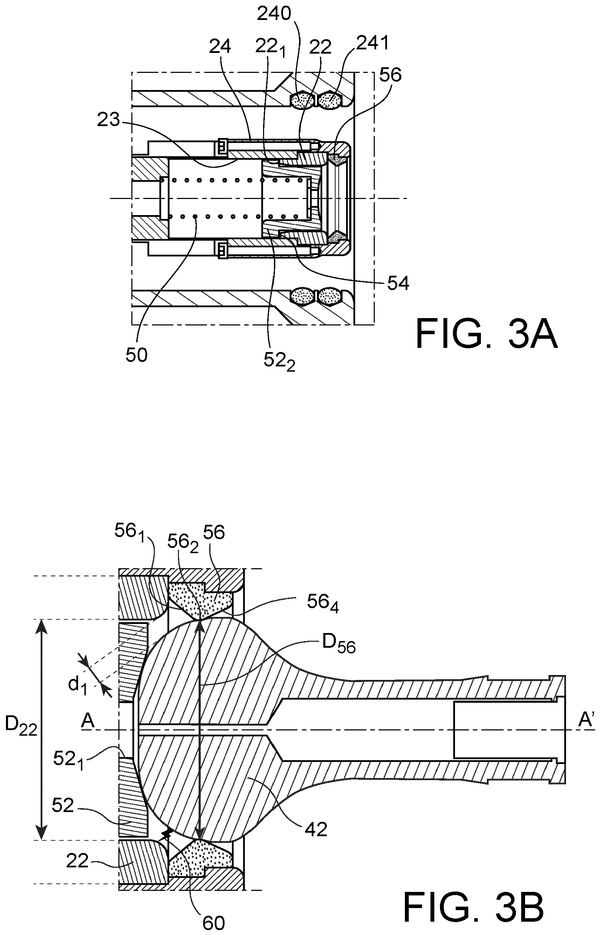

The arcing contact 42 has for example the form of a bulb having an external diameter D₄₂ (see figure 2D) which is slightly larger than the internal diameter D₂₂ of the fixed arcing contact 22 (see figure 3B). The movable arcing contact 42 comprises for example at least two fingers 42₁, 42₂ which have some elasticity so that they can be pressed in the direction of the axis AA' by the fixed arcing contact 22; they are separated by a central slot 43 which gives the fingers some freedom to be pressed in the direction of the axis AA', in particular when the movable arcing contact 42 enters the fixed arcing contact 22.

The movable arcing contact is fixedly mounted in the tube 30. For example the end of the cylinder 44 opposed to the arcing contact is fixed in a holding element or supporting plate 46 which is itself maintained in the tube 30 or, if supporting plate 46 is integrated to tube 30, it can be directly fixed to the tube 30.

In the fixed contacts, a piece (or moving tap) 52 of insulating material for example PTFE, is pressed against the movable arcing contact by a spring 50.

This piece 52, or at least part of it, is in the form of, or comprises, a disk or a cylinder, adapted to fit into the fixed acing contact so that at least part of its lateral side(s) is in contact with the inner diameter of the fixed arcing contact 22. It is preferably provided with a central hole 52₁ , which allows gas to circulate through the piece 52. Its front face 52₃, which is intended to bear against the front part of the movable arcing contact 42 can have at least a flat portion or comprise a concave portion adapted, or identical, to the shape of at least part of the front end 42₃ of the movable arcing contact, in order to better confine the arc which will be established between the contacts 22 and 42.

Figure 3A shows the fixed arcing contact 22 of the disconnector according to the invention in a completely open position (the movable contacts are not represented for clarity's sake). The main contact(s) is or are formed in this example by two spring rings 240 and 241. Both references 23 and 24 are support elements for arcing contact 22.

The piece 52 is pressed by spring 50 along the AA' axis and in the direction of the arcing contact 42. Preferably the movement of piece 52 is stopped after it has travelled a predetermined distance: it has for example a lateral leg 52₂ (see figure 3A) which abuts against a stop, which can be formed for example by a part, for example a stud or a rear portion 22₁, of the arcing contact 22.

As can be seen on figures 2A and 3A, another piece 56, for example a ring, of insulating material, is located at, or close to, the outlet of the arcing contact 22; this ring is centered on the axis AA'. Preferably, the internal diameter D₅₆ (see figure 3B) of at least part of the insulating piece 56 is identical to, or slightly smaller than, the internal diameter D₂₂ of the fixed arcing contact. It can be maintained sligthly floating for example in a groove formed by the part 24 and/or fixed arcing contact 22.

Both pieces 52 and 56 can be made for example of PTFE MOS₂ compound (or any other material which remains stable at a temperature of about 250°C).

When the movable arcing contact 42 separates from the fixed arcing contact 22, the spring 50 presses piece 52 against the movable arcing contact. An arc occurs when the arcing contacts 22, 42 separate, but the piece 52 is still applied against the front end of the movable arcing contact 42 and, together with the other insulating piece 56, it forms a limited volume inside which the arc occurs.

Figure 3B shows a detail of the fixed and movable arcing contacts 22, 42 just after their separation. An arc 60 results from their separation, but in a volume limited by the two arcing contacts 22, 42 and also by the insulating pieces 56, 52. Since the insulating piece 52 is pressed by the spring 50 against the movable arcing contact 42, the volume of gas which is exposed to the arc is very limited. This limits the amount of gas which is decomposed by the arc.

Figures 2A-2D show different steps of the opening phase of a disconnector according to the invention.

A first position is illustrated on figure 2A, in which both main contacts 240/241 and 41 are in contact with each other and was commented above.

After initiation of the opening phase, the main contacts 30 (41) and 240/241 slide against each other (figure 2B). The arcing contact 22 also slide against arcing contact 42, together with the insulating piece 52, until the arcing contacts 22, 42 separate (figure 2C), which generates an arc 60 as explained above in connection with figure 3B: the insulating piece 52 being continuously pressed by the spring 50 against the movable arcing contact 42, the volume of gas which is exposed to the arc is very limited as explained above. The contacts 22, 42 then completely separate (figure 2D), the movement of the insulating piece 52 being preferably stopped as explained above.

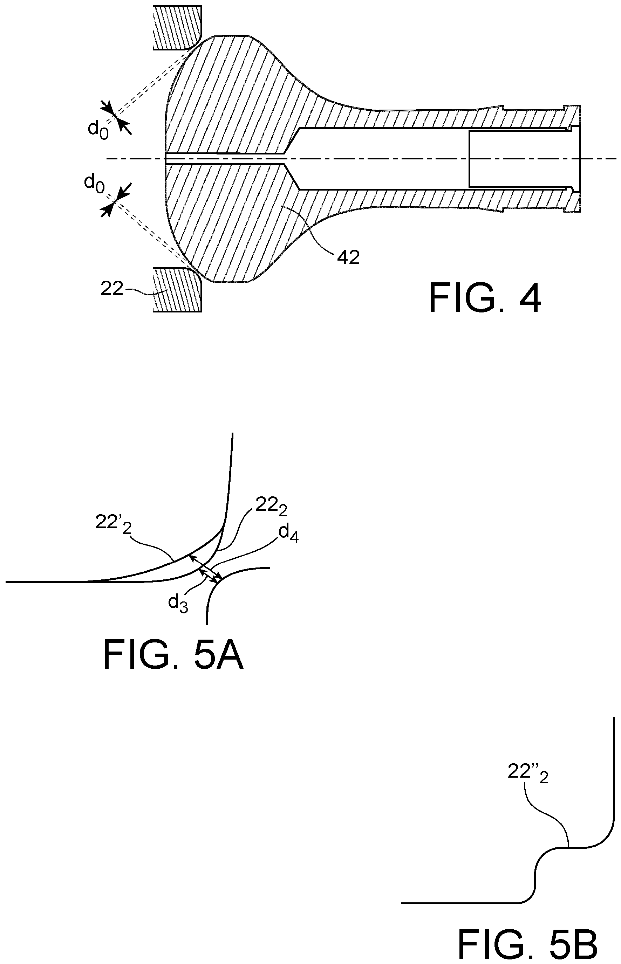

According to a particular embodiment, the insulating piece 56 can maintain a pressure and/or exert some force towards the AA' axis on the movable arcing contact 42 after it has left the fixed arcing contact. As explained on figure 4 (which represents the arcing contacts of a known embodiment, without any of the insulating pieces 52, 56), if, due to their elasticity, the fingers 42₁, 42₂ of the movable arcing contact 42 expand just after leaving the fixed arcing contact 22, the distance d₀ between both the movable arcing contact 42 and the fixed arcing contact 22 is kept smaller over a certain period of time. The insulating piece 56 according to the invention can have an internal shape comprising a restriction 56₂ of its internal diameter, which maintains some lateral pressure on the fingers 42₁, 42₂ of the movable arcing contact so that they cannot expand just after leaving the fixed arcing contact 22: thus the distance d₁ (see figure 3B) between the movable arcing contact 42 and the fixed arcing contact 22 is larger than the distance d₀ (if the fingers 42₁, 42₂ were relaxing due to their elasticity), which results in a shorter arcing duration: for example the arc has a duration reduced up to 75% or even 50 % with respect to the arcing duration in a known circuit-breaker without any of the insulating pieces 52, 56 or without the insulating piece 56 having said restriction. To achieve this, the internal diameter D₅₆ (see figure 3B) of at least part of the insulating piece 56 is preferably identical to or smaller or slightly smaller than, the internal diameter D₂₂ of the fixed arcing contact, so that the fingers of the movable arcing contact 42 cannot expand. For example, D₅₆ is 1,5 mm shorter than D₂₂; it can hardly be smaller than this value because the slot between the fingers is 1,5 mm wide, which means that the 4 fingers can move toward each other only for 1,5 mm.

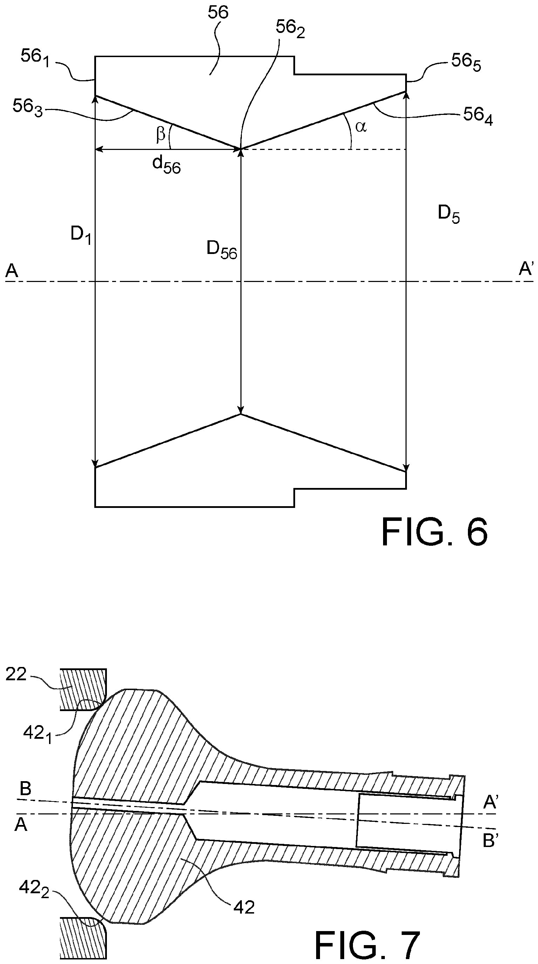

In a particular embodiment, the insulating piece 56 of the invention has a V-shaped cross section in a plane containing the AA' axis, as illustrated on figure 3B and 6.

For example, as illustrated on figure 6 (a cross section in a plane containing the AA' axis) said insulating piece 56 extends between a front face 56₁ which faces the fixed arcing contact 22 and an opposite back face 56s and has a restriction 56₂ (with a diameter D₅₆) between said both ends; it has a first slope 56₃ which is inclined in a first direction (towards the AA' axis) from the front face 56₁ to the restriction 56₂ and then a second slope 56₄ which is inclined in the opposite direction from the restriction to the back face 56s. The diameter D₁ of the front opening (located in the same plane as the front face 56₁) of the insulating piece 56 and the diameter D₅ of the back opening (located in the same plane as the back face 56₅) are both larger than the diameter D₅₆ at the restriction. Thus, the second slope 56₄ offers a regular shape for the movable arcing contact 42 which, when the disconnector is being closed, respectively opened, is thus progressively pressed towards the AA' axis, respectively opened in a direction opposed to the AA' axis.

This V-shaped cross section therefore allows a good electrical contact.

Preferably, the angle α is for example comprised between 50° and 10°, it is for example less than 45°.

Diameter D₅₆ is preferably selected so as to press the fingers 42 towards the axis AA' when closing the disconnector but without hindering them in their longitudinal movement along said axis.

According to another particular embodiment, which can be combined with the other aspects and/or embodiments of this invention, the end of the fixed arcing contact has a concave shape as explained on figure 5A, which makes the separation between both the movable and the fixed arcing contacts even faster: as can be seen on figure 5A, the distance d₃ between the normal, regular shape 22₂ of the front end of the arcing contact 22 and the movable arcing contact is smaller than the distance d₄ between the partly concave shape 22'₂ of the front end of the arcing contact 22 and the movable arcing contact. This, again, reduces the duration of the arc. This effect is even amplified if the front side of the arcing contact 22 has a stepped shape as illustrated on figure 5B: as soon as both contacts separate from each other, the distance between them drastically increases, reducing correspondingly the duration of the arc, and therefore the decomposition of the gas.

Another problem is illustrated on figure 7: the axis of the fixed arcing contact, which corresponds to the axis AA' of the device, and the axis BB' of the movable arcing contact may not be aligned with each other. Even a slight misalignment results in an arc not being uniform or homogeneous around the central axis AA' of the device and in a corresponding irregular wear at the periphery of both arcing contacts, because (as illustrated on figure 7) one side 42₁ of the movable arcing contact is closer to the fixed arcing contact than the other side 42₂: there is therefore an irregular loss of material at the periphery of the arcing contacts.

The insulating piece 56 according to the invention contributes to guiding the movable arcing contact so that it is aligned with the fixed arcing contact or that the centre of the front end of the movable arcing contact is on the AA' axis. As a result, the next arcs will not occur in a limited zone of the arcing contacts which have been subject to said irregular loss of material, but the arcs will occur homogeneously around the axis AA'. Actually, this loss of material will induce a poor contact/absence of contact, so that the arc will prefer an undamaged area. After 100 shots, it has been seen that the whole circumference of the contact 42 has been damaged, but very slightly. This little wear regularly spread around the contact 42 allows not to create peak and edge, which are very sensitive for dielectric strength. The above mentioned irregular wear and loss of material is therefore strongly reduced.

The actuation system 6, 8 comprises for example a rod 6 actuated at one of its ends 62 by a lever 8 (see figure 1) mounted to pivot about an axis 14 (perpendicular to the axis AA' of the disconnector). The other end 64 of the rod 6 is mounted in rotation about an axis 16 to move the cylinder 30 along the axis AA'. In other words, the actuation system converts the rotation of the axis 14 into a translation of the cylinder along axis AA'.

The invention finds application in GIS which operate under a rather low voltage (for example 27V) and at a rather low current (for example 3000A).

A disconnector according to the invention can be set up in a double busbar arrangement with coupling :
- A Bus Transfer Current Switching (BTCS);
- Or a Bus Charging Current Switching (BCCS).

The GIS comprises and operates in a gas, for example SF₆; alternatively, in order to reduce the greenhouse effects resulting from the use of SF₆, the following gas may be used:
- a gas comprising heptafluoroisobutyronitrile and/or heptafluoroisopropyl trifluoromethyl ketone (also named 2-butanone, 1,1,1,3,4,4,4-heptafluoro-3-(trifluoromethyl)- (CAS No 756-12-7)), possibly mixed with a gas or a dilution gas comprising at least CO₂ and/O₂ and/or N₂ and/or and/or an oxygenated compound;
- or in a gas comprising at least COz and/O₂ and/or N₂ and/or an oxygenated compound.
The reduced arcing time obtained with a disconnector according to the invention reduces the decomposition of a gas like one of the above mentioned alternative gas.

## Claims

1. A disconnector (100) for a GIS comprising:
- a pair of permanent contacts (24, 41), one (24) fixed and the other one (41) movable along an axis (AA'), called the axis of the disconnector;
- a pair of arcing contacts (22, 42), one (22) fixed and the other one (42) movable;
- an insulating part (52) located inside said fixed arcing contacts (22, 42), and means (50) for pressing said insulating part against a front surface of the movable arcing contact (42);
- an insulating ring (56) located at the outlet of the fixed arcing contact (22).

2. A disconnector according to claim 1, said insulating ring (56) having an internal diameter (D₅₆) equal to or smaller than, the internal diameter (D₂₂) of the fixed arcing contact.

3. A disconnector according to claim 3, said insulating ring (56) having an internal restriction (56₂).

4. A disconnector according to any of claims 1 to 3, said insulating ring (56) having a V-shaped section in a plane containing said axis (AA').

5. A disconnector according to claim 4, said insulating ring (56) extending along the axis (AA') between a front face (56₁) which faces said fixed arcing contact (22) and an opposite back face (56₅) and its internal surface having a restriction (56₂) between said both ends.

6. A disconnector according to claim 5, said internal surface having a first slope (56₃) which is inclined in a first direction from said front face (56₁) to the restriction (56₂) and then a second slope (56₄) which is inclined in the opposite direction from the restriction to the back face (56₅).

7. A disconnector according to claim 6, said second slope (56₄) being inclined with an angle comprised between 50° and 10° with respect to the axis (AA') of the circuit breaker.

8. A disconnector according to any of claims 1 to 7, a front end of the fixed arcing contact (22) having a concave portion (22'₂).

9. A disconnector according to claim 8, a front end of the fixed arcing contact (22) having a stair step shape (22"₂).

10. A disconnector according to any of claims 1 to 9, at least part of the insulating part (52) located inside said fixed arcing contact (22) having the shape of a disk or of a cylinder.

11. A disconnector according to any of claims 1 to 10, the insulating part (52) located inside said fixed arcing contact (22) comprising a stopping member (52z) cooperating with a stopping member (221) of the fixed arcing contact to block the movement of the insulating part (52) under the action of the means (50) for pressing said insulating part against a front surface of the movable arcing contact (42).

12. A GIS comprising:
- a metal tank (1) filled with a gas;
- a disconnector (100) according to any of claims 1 to 11.

13. A GIS according to claim 12, said gas comprising SF₆, or heptafluoroisobutyronitrile and/or heptafluoroisopropyl trifluoromethyl ketone (also named 2-butanone, 1,1,1,3,4,4,4-heptafluoro-3-(trifluoromethyl)- (CAS No 756-12-7)) and/or CO₂ and/or O₂ and/or N₂ and/or an oxygenated compounds, for example said comprising both CO₂ and a fluorinated compound, for example heptafluoroisobutyronitrile and/or heptafluoroisopropyl trifluoromethyl ketone.

14. A method for opening a disconnector of a GIS according to claim 12 or 13, comprising:
- moving the movable arcing contact (42) and the movable main contact with respect to the fixed arcing contact (22) and the fixed main contact, thereby opening the main contacts and closing the pair of arcing contacts, and pressing the insulating part (52) located inside said fixed arcing contacts (22, 42) against a front surface of the movable arcing contact (42);
- separating said pair of arcing contacts (22, 42) from each other, thereby triggering an arc (60) between them, in a volume limited by said arcing contacts (22, 42) and by both said insulating part (52) and said insulating ring (56).
